# EUROPÄISCHE PATENTSCHRIFT

(11) **EP 4 522 901 B1**
(45) Veröffentlichungstag und Bekanntmachung des Hinweises auf die Patenterteilung: **10.12.2025**
(21) Anmeldenummer: 23739125.5
(22) Anmeldetag: 22.06.2023
(51) Int. Cl.: F16L 3/123, F16L 33/02, F16L 41/02, H01M 10/613, H01M 10/625, H01M 10/6556, H01M 10/6568, H01M 10/6557, F16L 33/025

(54) **BATTERIE-KÜHLMITTELVERTEILSYSTEM**
BATTERY COOLANT DISTRIBUTION SYSTEM
SYSTÈME DE DISTRIBUTION DU LIQUIDE DE REFROIDISSEMENT D'UNE BATTERIE

(30) Priorität: 28.06.2022 DE 102022206472
(43) Veröffentlichungstag der Anmeldung: 19.03.2025
(73) Patentinhaber: Siemens Mobility GmbH, 80997 München (DE)
(72) Erfinder: TUMA, Claus, 91207 Lauf/Peg. (DE)
(74) Vertreter: Siemens Patent Attorneys
(86) Internationale Anmeldenummer: PCT/EP2023/066927
(87) Internationale Veröffentlichungsnummer: WO 2024/002845

(56) Entgegenhaltungen:
- WO-A1-2010/094787
- CN-A- 106 945 506
- CN-U- 202 756 817
- FR-A1- 3 080 166

## Beschreibung

Die Erfindung betrifft ein Batterie-Kühlmittelverteilsystem für ein Fahrzeug. Weiterhin betrifft die Erfindung ein Verfahren zum Herstellen eines Batterie-Kühlmittelverteilsystems. Zudem betrifft die Erfindung ein Fahrzeug.

Elektrofahrzeuge werden aus umweltpolitischen Gründen stark propagiert und gefördert. Als Energiequelle weisen Elektrofahrzeuge umfangreiche Batteriepakete auf, die eine Vielzahl von Batteriezellen umfassen. Die Batteriezellen erzeugen im Betrieb eine Menge Abwärme. Außerdem muss die Temperatur der Batteriezellen in einem vorbestimmten Temperaturbereich gehalten werden, damit sie korrekt funktionieren und nicht beschädigt oder gar zerstört werden. Um die Batteriezellen zu kühlen, werden zum Beispiel Kühlprofile aus Aluminium zur Kühlung verwendet. Diese Kühlprofile verlaufen zwischen dem oberen Ende und dem unteren Ende eines Batteriepakets an den einzelnen Batteriezellen vorbei, umfassen in vertikaler Richtung, also zwischen dem oberen und dem unteren Ende der Kühlprofile verlaufende Kühlmittelkanäle und werden über flexible Schläuche mit waagrecht bzw. senkrecht zu den Kühlprofilen verlaufenden Kühlmittelsammelkanälen verbunden. Diese flexiblen Schläuche, welche zur Verbindung der Kühlmittelsammelkanäle mit den Kühlmittelkanälen der Kühlprofile dienen, weisen als Anschlusselemente zum Beispiel passende Fittings oder Anschlussverschraubungen auf. Diese Anschlussverschraubungen werden einzeln in das betreffende Kühlprofil und den zugeordneten Kühlmittelsammelkanal geschraubt.

Die Enden der Kühlmittelsammelkanäle sind mit Zufuhrschläuchen bzw. Zuleitungen und Abführschläuchen bzw. Ableitungen verbunden, die das Kühlmittel von einem Kühlersystem zu dem Batteriepaket heranführen bzw. das erwärmte Kühlmittel von dem Batteriepaket abführen und dem Kühlersystem zuführen.

Allerdings erfordert die Montage der einzelnen Anschlusselemente sehr viel Handarbeit, da jedes einzelne Anschlusselement angeschraubt werden muss. Auch müssen die Anschlüsse zu dem Kühlprofil und dem Kühlsammelrohr ausreichend abgedichtet werden. Hierzu müssen jeweils pro flexiblen Schlauch vier Dichtelemente, wie zum Beispiel O-Ringe, montiert werden. Ein weiteres Problem besteht darin, dass die Kühlprofile Toleranzen von etwa 1,5 mm aufweisen, die bei der Montage der Anschlusselemente berücksichtigt werden müssen.

In CN 106 945 506 ist eine Verbindungseinheit zum Verbinden von drei schlauchartigen Kühlmittelleitungen beschrieben.

In FR 3 080 166 A1 ist ein Kühlmittelsammelsystem mit einer Mehrzahl von T-förmigen Verbindungsstücken, welche in Kühlkanälen einer Batterie-Kühleinheit angeordnet sind, beschrieben. Die T-förmigen Verbindungsstücke werden mit Hilfe eines Clip-Mechanismus an der Batterie-Kühleinheit fixiert.

In CN 202 756 817 U ist ein T-förmiges Verbindungsstück zur Verbindung von Kühlleitungen für eine Elektrobatterie eines Fahrzeugs beschrieben.

In WO 2010 / 094 787 A1 ist ein Kühlmittelsammelsystem mit T-förmigen Verbindungsstücken, welche in Kühlkanälen einer Batterie-Kühleinheit angeordnet sind, beschrieben.

Es besteht also die Aufgabe, eine zuverlässige und gegenüber Toleranzen robuste Verbindung zwischen der Kühlmittelzufuhr bzw. Kühlmittelabfuhr und den Kühlmittelkanälen der Kühlprofile eines Batterie-Kühlmittelverteilsystems bereitzustellen, welche weniger Montagearbeit erfordert als bei einer herkömmlichen Anordnung.

Diese Aufgabe wird durch ein Batterie-Kühlmittelverteilsystem gemäß Patentanspruch 1, ein Verfahren zum Herstellen eines Batterie-Kühlmittelverteilsystems gemäß Patentanspruch 9 und ein Fahrzeug gemäß Patentanspruch 10 gelöst.

Das erfindungsgemäße Batterie-Kühlmittelverteilsystem für ein Fahrzeug weist ein Batterie-Kühlprofil mit einem darin verlaufenden Kühlmittelkanal und eine Kühlmittelsammeleinrichtung auf. Die Kühlmittelsammeleinrichtung weist mindestens zwei flexible Kühlmittelsammelrohre und mindestens ein T-förmiges Verbindungsstück mit drei rohrförmigen Verbindungselementen auf. Die flexiblen Kühlmittelsammelrohre erlauben aufgrund ihrer Flexibilität eine Anpassung an die bei der Anordnung von Batterie-Kühlprofilen üblichen Toleranzen von etwa 1,5 mm. Das mindestens eine T-förmige Verbindungsstück ist zwischen den flexiblen Kühlmittelsammelrohren angeordnet und mit den flexiblen Kühlmittelsammelrohren flüssigkeitsdicht verbunden. Ein erstes der drei rohrförmigen Verbindungselemente, welches quer zu den anderen rohrförmigen Verbindungselementen des mindestens einen T-förmigen Verbindungsstücks orientiert ist, ist für eine Aufnahme in dem Kühlmittelkanal des Batterie-Kühlprofils ausgebildet. Dabei weist das T-förmige Verbindungsstück eine Fixiereinheit zum Fixieren des T-förmigen Verbindungsstücks an dem Batterie-Kühlprofil auf und die Fixiereinheit weist eine Schraubstelle zum Verschrauben der Fixiereinheit mit dem Batterie-Kühlprofil auf.

Die Schraubstelle ist einstückig mit dem T-förmigen Verbindungsstück der Kühlmittelsammeleinrichtung verbunden und bildet einen zungenförmigen Vorsprung mit einem Schraubloch. Die zwei flexiblen Kühlmittelsammelrohre sind mit einem zu einem Querschnitt von zwei gegenüberliegenden zweiten und dritten rohrförmigen Verbindungselementen der drei rohrförmigen Verbindungselemente passenden Querschnitt ausgebildet, so dass sie durch Aufsetzen auf oder Einstecken in die zweiten und dritten rohrförmigen Verbindungselemente mit dem mindestens einen T-förmigen Verbindungsstück dichtend verbunden sind. Vorzugsweise entspricht dabei der Innenquerschnitt der flexiblen Kühlmittelsammelrohre dem Außenquerschnitt der rohrförmigen Verbindungselemente des mindestens einen T-förmigen Verbindungsstücks, so dass die flexiblen Kühlmittelsammelrohre auf die rohrförmigen Verbindungselemente aufgesteckt oder aufgesetzt werden können.

Vorteilhaft kann der Montageaufwand beim Aufbau im Vergleich zu herkömmlichen Batterie-Kühlmittelverteilsystemen stark reduziert werden. Dabei kann das sonst übliche feste Kühlmittelsammelrohr bzw. der sonst übliche feste bzw. starre Kühlmittelsammelkanal entfallen. Die flexiblen Kühlmittelsammelrohre können vielmehr direkt mit einem Zufuhrschlauch oder Abfuhrschlauch, der jeweils mit einem Kühlersystem verbunden ist, verbunden werden. Vorteilhaft kann durch die Kombination aus den flexiblen Kühlmittelsammelrohren und dem T-förmigen Verbindungsstück eine aufwändig zu montierende herkömmliche Anordnung aus flexiblen Schläuchen und Anschlusselementen, insbesondere passenden Fittings oder Anschlussverschraubungen, sowie einem starren Kühlmittelsammelkanal mit einer Vielzahl von Dichtstellen ersetzt werden.

Das erfindungsgemäße Batterie-Kühlmittelverteilsystem für ein Fahrzeug weist also ein Batterie-Kühlprofil mit einem darin verlaufenden Kühlmittelkanal und eine Kühlmittelsammeleinrichtung auf. Das Batterie-Kühlprofil befindet sich räumlich direkt bei den Batteriezellen des Fahrzeugs. Die durch den darin verlaufenden Kühlmittelkanal fließende Kühlflüssigkeit führt die von den Batteriezellen erzeugte Wärme oder auch Umgebungswärme ab. Es sei erwähnt, dass ein Batterie-Kühlprofil üblicherweise eine Mehrzahl von parallel zueinander angeordneten Kühlmittelkanälen umfasst und der Singular nur der Einfachheit halber im Zusammenhang mit dem Kühlmittelkanal verwendet wurde. Aufgrund der geringeren Anzahl der Teile für eine Verbindung zwischen dem Kühlmittelkanal und einem Zufuhrschlauch oder Abfuhrschlauch eines Kühlersystems kann vorteilhaft ein Aufbau des erfindungsgemäßen Batterie-Kühlmittelverteilsystems deutlich einfacher erfolgen als der Aufbau eines herkömmlichen Batterie-Kühlmittelverteilsystems. Außerdem erlauben die flexiblen Kühlmittelsammelrohre der Kühlmittelsammeleinrichtung eine vereinfachte Anpassung der Verbindung zwischen dem Kühlmittelkanal bzw. den Kühlmittelkanälen des Kühlprofils und einem Zufuhrschlauch oder Abfuhrschlauch an Toleranzen bezüglich der Positionierung der Kühlmittelkanäle des Kühlprofils.

Bevorzugt ist das erste rohrförmige Verbindungselement der drei rohrförmigen Verbindungselemente des T-förmigen Verbindungsstücks der Kühlmittelsammeleinrichtung in den Kühlmittelkanal des Batterie-Kühlprofils des erfindungsgemäßen Batterie-Kühlmittelverteilsystems eingefügt. Vorteilhaft werden zur Verbindung des T-förmigen Verbindungsstücks mit dem Batterie-Kühlprofil keine mehrteiligen Verbindungselemente benötigt, da das erste rohrförmige Verbindungselement direkt in einen ihm zugeordneten Kühlmittelkanal des Batterie-Kühlprofils eingesetzt bzw. eingefügt ist.

Bei dem erfindungsgemäßen Verfahren zum Herstellen eines Batterie-Kühlmittelsystems mit einer Kühlmittelsammeleinrichtung wird mindestens ein T-förmiges Verbindungsstück mit drei rohrförmigen Verbindungselementen mit einem ersten der drei rohrförmigen Verbindungselemente, welches quer zu den anderen rohrförmigen Verbindungselementen orientiert ist, für eine Aufnahme in einem Kühlmittelkanal eines Batterie-Kühlprofils ausgebildet. Bildlich gesprochen bildet das erste rohrförmige Verbindungselement den vertikalen Balken des durch das T-förmige Verbindungsstück gebildeten T und das zweite und dritte rohrförmige Verbindungselement bilden gemeinsam den horizontalen Balken des durch das T-förmige Verbindungsstück gebildeten T.

Es werden mindestens zwei flexible Kühlmittelsammelrohre mit einem zu einem Querschnitt von zwei gegenüberliegenden zweiten und dritten Verbindungselementen der drei rohrförmigen Verbindungselemente passenden Querschnitt ausgebildet. Dabei weist das T-förmige Verbindungsstück eine Fixiereinheit zum Fixieren des T-förmigen Verbindungsstücks an dem Batterie-Kühlprofil auf und die Fixiereinheit weist eine Schraubstelle zum Verschrauben der Fixiereinheit mit dem Batterie-Kühlprofil auf. Die Schraubstelle ist einstückig mit dem T-förmigen Verbindungsstück der Kühlmittelsammeleinrichtung verbunden und bildet einen zungenförmigen Vorsprung mit einem Schraubloch.

Das mindestens eine T-förmige Verbindungsstück wird schließlich zwischen den flexiblen Kühlmittelsammelrohren der Kühlmittelsammeleinrichtung angeordnet und die zweiten und dritten Verbindungselemente des T-förmigen Verbindungsstücks werden mit den flexiblen Kühlmittelsammelrohren verbunden. Weiterhin wird das erste der drei rohrförmigen Verbindungselemente des T-förmigen Verbindungsstücks in den Kühlmittelkanal des Batterie-Kühlprofils eingefügt. Das erfindungsgemäße Verfahren teilt die im Zusammenhang mit dem erfindungsgemäßen Batterie-Kühlmittelverteilsystem genannten Vorteile einer vereinfachten Montage bzw. eines vereinfachten Zusammenbaus.

Bei dem erfindungsgemäßen Verfahren zum Herstellen eines Batterie-Kühlmittelverteilsystems wird also das erste der drei rohrförmigen Verbindungselemente des T-förmigen Verbindungsstücks in einen Kühlmittelkanal eines Batterie-Kühlprofils eingefügt. Das erste rohrförmige Verbindungselement weist dabei einen an den Innendurchmesser des Kühlmittelkanals angepassten Außendurchmesser auf. Das T-förmige Verbindungsstück wird mit einer Fixiereinheit zum Fixieren des T-förmigen Verbindungsstücks an dem Batterie-Kühlprofil fixiert, wobei die Fixiereinheit eine Schraubstelle zum Verschrauben der Fixiereinheit mit dem Batterie-Kühlprofil aufweist.

Wie später noch im Detail erläutert, kann auch ein zusätzliches Dichtelement zwischen die Innenfläche des Kühlmittelkanals und die Außenfläche des ersten rohrförmigen Verbindungselements gesetzt werden, um ein Austreten von Kühlflüssigkeit bzw. von flüssigem Kühlmittel an der Verbindungsstelle bzw. Kontaktfläche zwischen diesen beiden Baugruppen zu verhindern. Das erfindungsgemäße Verfahren zum Herstellen eines Batterie-Kühlmittelverteilsystems teilt die Vorteile des erfindungsgemäßen Batterie-Kühlmittelverteilsystems.

Das erfindungsgemäße Fahrzeug, vorzugsweise ein Elektrofahrzeug, besonders bevorzugt ein elektrisch betriebenes Schienenfahrzeug oder ein elektrisch betriebenes Flurförderfahrzeug, weist eine elektrische Batterie mit einem erfindungsgemäßen Batterie-Kühlmittelverteilsystem mit einer Kühlmittelsammeleinrichtung auf. Ein Flurförderfahrzeug, insbesondere ein Gabelstapler, umfasst fahrbare Fördermittel, die auf planen Flächen zum Einsatz kommen. Das erfindungsgemäße Fahrzeug teil die Vorteile des erfindungsgemäßen Batterie-Kühlmittelverteilsystems.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie und deren Beschreibungsteilen weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

Bevorzugt weist das erfindungsgemäße Batterie-Kühlmittelverteilsystem ein Dichtelement zur Abdichtung zwischen dem ersten rohrförmigen Verbindungselement und dem Kühlmittelkanal auf. Ein solches Dichtelement verhindert ein Herausfließen von Kühlmittel über toleranzbedingte Aussparungen bzw. Zwischenräume, welche zum Beispiel durch unterschiedliche Abmessungen, Unebenheiten, insbesondere Riefen in der Oberfläche des ersten rohrförmigen Verbindungselements oder des Kühlmittelkanals verursacht werden, im Kontaktbereich zwischen dem ersten rohrförmigen Verbindungselement und dem Kühlmittelkanal.

Besonders bevorzugt umfasst das Dichtelement des erfindungsgemäßen Batterie-Kühlmittelverteilsystems einen O-Ring. Vorteilhaft können Toleranzen zwischen dem ersten rohrförmigen Verbindungselement und dem Kühlmittelkanal durch das Dichtelement ausgeglichen und der durch die Toleranzen entstehende Zwischenraum abgedichtet werden, so dass ein Austreten von Flüssigkeit an der Verbindungstelle zwischen dem T-förmigen Verbindungsstück und dem Batterie-Kühlprofil verhindert wird.

Wie bereits erwähnt, weist das T-förmige Verbindungsstück eine Fixiereinheit zum Fixieren an dem Batterie-Kühlprofil auf. Bevorzugt erfolgt das Fixieren des T-förmigen Verbindungsstücks an einer sogenannten Kühlprofilplatte oder Kühlprofilblende die mit dem Kühlprofil fest, vorzugsweise einstückig verbunden ist. Die Kühlprofilplatte bietet eine plane Auflagefläche, auf der die Kühlmittelsammeleinrichtung und insbesondere das T-förmige Verbindungsstück positioniert und fixiert werden kann. Vorteilhaft kann durch die Fixierung ein Lösen der Kühlmittelsammeleinrichtung von dem Batterie-Kühlprofil, beispielsweise in Folge von Vibrationen oder äußerer mechanischer Gewalteinwirkung, vermieden werden.

Wie ebenfalls bereits erläutert, weist die Fixiereinheit eine Schraubstelle zum Verschrauben mit dem Batterie-Kühlprofil auf. Vorteilhaft kann eine Montage oder Demontage des T-förmigen Verbindungsstücks an der Kühlprofilplatte durch eine einfache Schraubbewegung erfolgen und gleichzeitig eine zuverlässige Fixierung des T-förmigen Verbindungsstücks an der Kühlprofilplatte erreicht werden.

Bevorzugt sind die flexiblen Kühlmittelsammelrohre der Kühlmittelsammeleinrichtung des erfindungsgemäßen Batterie-Kühlmittelverteilsystems mit einer lösbaren Fixiereinheit, besonders bevorzugt mit einer Rohrschelle, auch als Schraubschelle oder Quetschschelle bezeichnet, an dem T-förmigen Verbindungsstück fixiert. Eine solche Rohrschelle umgibt den gesamten Umfang eines flexiblen Kühlmittelrohrs und klemmt das flexible Kühlmittelsammelrohr auf dem T-förmigen Verbindungsstück fest. Vorteilhaft lassen sich die flexiblen Kühlmittelsammelrohre durch die Rohrschelle leicht in einer gewünschten bzw. angepassten Position relativ zu dem T-förmigen Verbindungsstück an diesem befestigen oder von diesem lösen. Aufgrund der leichten Lösbarkeit der einzelnen Bauelemente durch ein Entfernen einer Rohrschelle können an der Kühlmittelsammeleinrichtung sehr leicht Wartungsarbeiten oder Reparaturarbeiten durchgeführt werden. Weiterhin ist es auch leicht möglich, die flexiblen Kühlmittelsammelrohre und/oder die T-förmigen Verbindungsstücke an einem Kühlprofil einer Fahrzeugbatterie zu demontieren und an einer anderen Kühlmittelsammeleinrichtung bzw. einer anderen Fahrzeugbatterie wieder zu montieren.

Die flexiblen Kühlmittelsammelrohre weisen bevorzugt ein flexibles und gegenüber üblichen Kühlmitteln beständiges Material auf. Ein solche Material umfasst bevorzugt eines der folgenden Materialarten:
- Polyethylen,
- Polytetrafluorethylen (PTFE),
- Perfluorethylenpropylen (FEP).

Die genannten Materialarten sind insbesondere gegenüber Glykol-Wasser-Gemischen, welche als Kühlflüssigkeit eingesetzt werden, beständig.

Es soll an dieser Stelle nochmals ausdrücklich erwähnt werden, dass in einer üblichen Fahrzeugbatterie eine Mehrzahl von Kühlprofilen nebeneinander angeordnet sind und daher die Kühlmittelsammeleinrichtung des erfindungsgemäßen Kühlmittelverteilsystems bevorzugt auch eine Mehrzahl der T-förmigen Verbindungsstücke und mindestens drei flexible Kühlmittelsammelrohre umfasst. Dabei sind die flexiblen Kühlmittelsammelrohre durch die Mehrzahl der T-förmigen Verbindungsstücke seriell miteinander verbunden. Sie bilden eine Art Kette, wobei die T-förmigen Verbindungsstücke jeweils zwei flexible Kühlmittelsammelrohre verbinden und in die Kühlmittelkanäle der nebeneinander angeordneten Kühlprofileinheiten gesteckt sind. Dabei können die flexiblen Kühlmittelsammelrohre über lösbare Fixiereinheiten, vorzugsweise Rohrschellen, derart mit den T-förmigen Verbindungsstücken verbunden werden, dass die Abstände zwischen benachbarten T-förmigen Verbindungsstücken den Abständen der Kühlmittelkanäle benachbarter Kühlprofileinheiten entsprechen bzw. zu diesen passen. Bildlich gesprochen, können die flexiblen Kühlmittelsammelrohre in Längsrichtung bzw. Axialrichtung auf den zweiten und dritten rohrförmigen Verbindungselementen der T-förmigen Verbindungsstücke verschoben werden, bis die Abstände zwischen den T-förmigen Verbindungsstücken zu den möglicherweise leicht unterschiedlichen Abständen der Kühlmittelkanäle benachbarter Kühlprofileinheiten passen. Vorteilhaft wird eine Montage der Kühlmittelsammeleinrichtung bei auftretenden Toleranzen der Abstände zwischen den Kühlmittelkanälen sehr erleichtert.

Bevorzugt umfasst das erfindungsgemäße Batterie-Kühlmittelverteilsystem eine Anschlussleitung zu einem Kühlersystem, wobei die Anschlussleitung direkt mit einem äußeren der flexiblen Kühlmittelsammelrohre verbunden ist. Als Kühlersystem soll ein technisches System verstanden werden, welches eine Kühlflüssigkeit auf eine vorbestimmte reduzierte Temperatur abkühlt und einen Kühlmittelkreislauf aufrechterhält. Hierzu umfasst ein Kühlersystem einerseits einen Wärmetauscher und andererseits eine Kühlmittelpumpe, mit der das eingesetzte Kühlmittel durch den Kühlmittelkreislauf gepumpt wird.

Die Anschlussleitung umfasst bevorzugt einen Zufuhrschlauch bzw. eine Zuleitung und einen Abführschlauch bzw. eine Ableitung, die gekühltes Kühlmittel von dem Kühlersystem zu dem erfindungsgemäßen Batterie-Kühlmittelverteilsystem heranführen bzw. erwärmtes Kühlmittel von dem erfindungsgemäßen Batterie-Kühlmittelverteilsystem abführen und dem Kühlersystem zuführen. Als direkte Verbindung soll ein einzelnes Verbindungselement oder Verbindungstück im Gegensatz zu der herkömmlichen Anordnung aus flexiblen Schläuchen und jeweils einem Anschlusselement, wie zum Beispiel einem passenden Fitting und/oder einer passenden Anschlussverschraubung, verstanden werden.

Vorteilhaft kann durch die direkte Verbindung eine aufwändig zu montierende herkömmliche Anordnung aus einer Mehrzahl von Anschlusselementen und einem Schlauch sowie einem starren Kühlmittelsammelkanal mit einer Vielzahl von Dichtstellen vermieden werden.

Dabei ist die direkte Verbindung bevorzugt durch eine Schnellkupplung zwischen dem äußeren flexiblen Kühlmittelsammelrohr und der Anschlussleitung ausgebildet. Vorteilhaft können aufgrund der einfachen und schnellen Bedienbarkeit der Schnellkupplung einzelne Bauelemente, insbesondere Teile der Kühlmittelsammeleinrichtung des erfindungsgemäßen Batterie-Kühlmittelverteilsystems, aber auch die erwähnte Anschlussleitung, leicht ausgetauscht werden.

Die Erfindung wird im Folgenden unter Hinweis auf die beigefügten Figuren anhand von Ausführungsbeispielen noch einmal näher erläutert. Es zeigen:
FIG 1 eine perspektivische Ansicht einer elektrischen Fahrzeugbatterie mit einem herkömmlichen Batterie-Kühlmittelverteilsystem,
FIG 2 eine perspektivische Ansicht des in FIG 1 gezeigten herkömmlichen Batterie-Kühlmittelverteilsystems mit einer teilweise geöffneten Kühlprofilblende,
FIG 3 eine Detailansicht auf einen flexiblen Schlauch zur Verbindung eines Kühlmittelsammelkanals mit einem Kühlmittelkanal eines Batterie-Kühlprofils,
FIG 4 eine perspektivische Schnittansicht einer Kühlmittelsammeleinrichtung eines Batterie-Kühlmittelverteilsystems gemäß einem Ausführungsbeispiel der Erfindung,
FIG 5 eine Draufsicht auf eine Kühlmittelsammeleinrichtung eines Batterie-Kühlmittelverteilsystems gemäß einem Ausführungsbeispiel der Erfindung,
FIG 6 eine Schnittansicht der in FIG 5 gezeigten Kühlmittelsammeleinrichtung eines Batterie-Kühlmittelverteilsystems gemäß einem Ausführungsbeispiel der Erfindung,
FIG 7 eine detaillierte Draufsicht auf die in FIG 6 gezeigte Kühlmittelsammeleinrichtung,
FIG 8 ein Flussdiagramm, welches ein Verfahren zum Herstellen eines Batterie-Kühlmittelverteilsystems gemäß einem Ausführungsbeispiel der Erfindung veranschaulicht,
FIG 9 eine schematische Darstellung eines Fahrzeugs mit einem Batterie-Kühlmittelverteilsystem gemäß einem Ausführungsbeispiel der Erfindung.

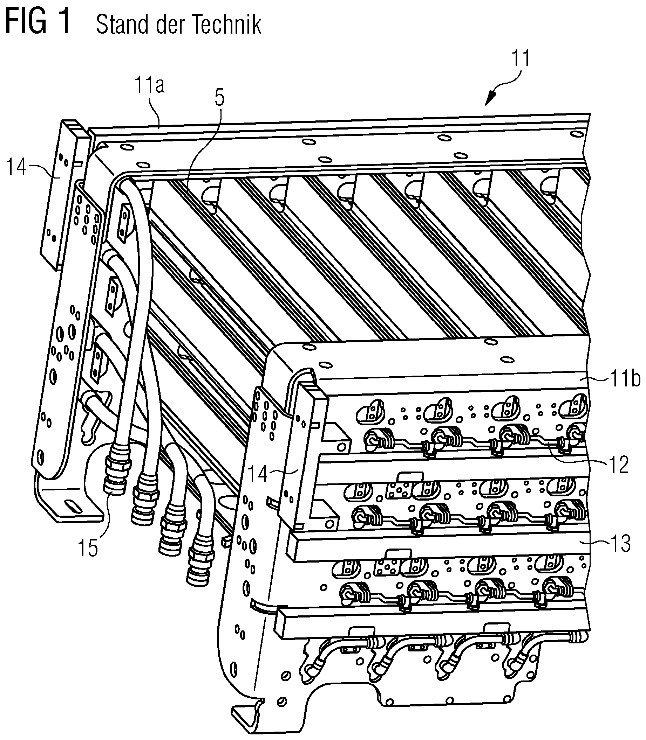

In FIG 1 ist eine perspektivische Ansicht einer elektrischen Fahrzeugbatterie 11 mit einem herkömmlichen Batterie-Kühlmittelverteilsystem veranschaulicht. Dabei sind die eigentlichen Batteriezellen weggelassen, um die zur Kühlung dieser Batteriezellen erforderlichen Strukturen besser sichtbar zu machen. Die Fahrzeugbatterie 11 umfasst als Stirnseiten eine Basisseite 11a und eine Kopfseite 11b, wobei in FIG 1 im Vordergrund die Kopfseite 11b zu erkennen ist. Zwischen der Basisseite 11a und der Kopfseite 11b verläuft ein sogenanntes Batterie-Kühlprofil 5, welches im Innern jeweils einen Kühlmittelkanal (in FIG 1 nicht sichtbar) umfasst. Der Kühlmittelkanal ist auf der jeweiligen Stirnseite durch eine schlauchförmige Verbindungseinheit 12 mit einem auf der jeweiligen Stirnseite verlaufenden Kühlmittelsammelkanal 13 verbunden. Der Kühlmittelsammelkanal 13 mündet an der Seite in eine Schnittstelle oder Portstruktur 14 zu einem Zufuhrschlauch oder Anschlussschlauch bzw. Abfuhrschlauch 15.

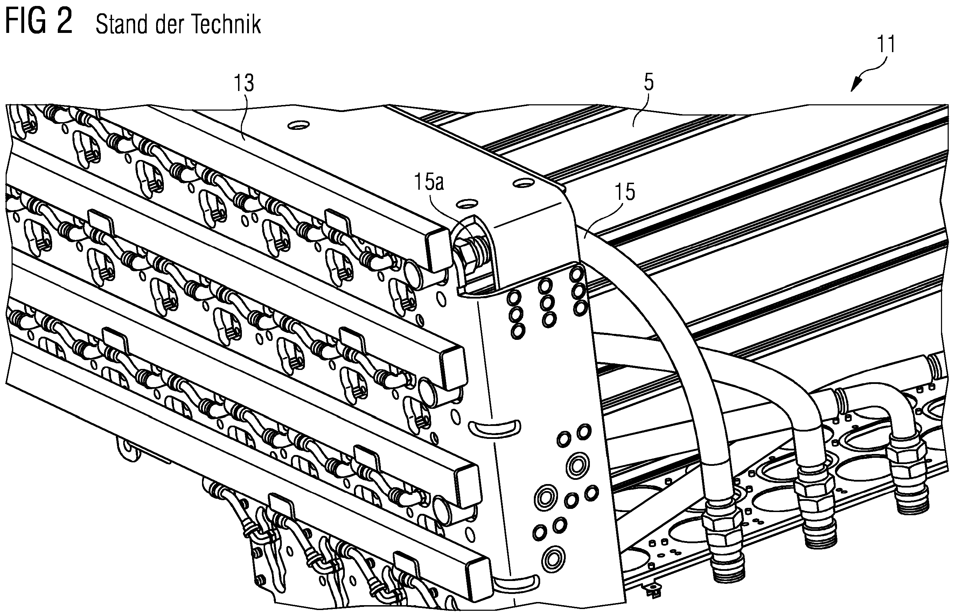

In FIG 2 ist eine perspektivische Ansicht des in FIG 1 gezeigten herkömmlichen Batterie-Kühlmittelverteilsystems mit einer teilweise geöffneten Stirnseite gezeigt. Durch die an der im Vordergrund befindlichen Ecke der Stirnseite gezeigte Öffnung ist ein Anschluss 15a eines Zufuhrschlauchs 15 zu erkennen. Dieser Anschluss 15a ist mit einem zu dem Anschluss quer verlaufenden Kühlmittelsammelkanal 13 verbunden. Die Kühlmittelsammelkanäle 13 verlaufen auf der Stirnseite parallel zueinander und bilden die Schnittstelle zwischen den Zufuhrschläuchen 15 und den Batterie-Kühlprofilen 5.

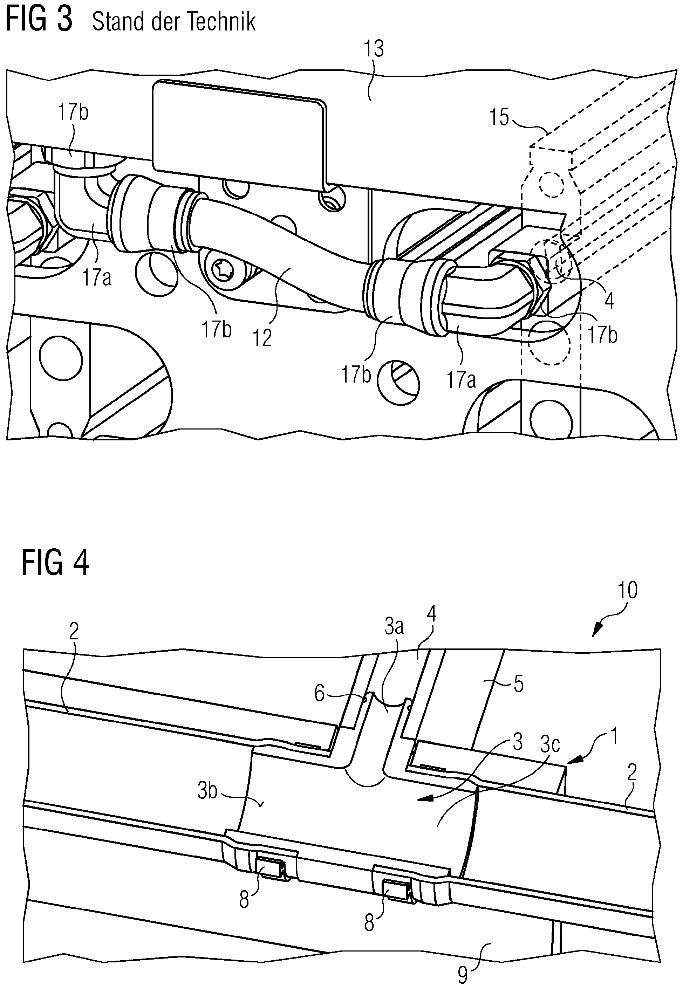

In FIG 3 ist eine Detailansicht auf einen flexiblen Schlauch bzw. eine schlauchförmige Verbindungseinheit 12 zur Verbindung eines Kühlmittelsammelkanals 13 mit einem Kühlmittelkanal 4 (gestrichelt gezeichnet) eines Batterie-Kühlprofils 5 dargestellt. Der Kühlmittelkanal 4 befindet sich im Inneren eines Batterie-Kühlprofils 5 und verläuft senkrecht zu dem zugeordneten Kühlmittelsammelkanal 13. Wie bereits erwähnt, werden für die Verbindung zwischen dem Kühlmittelsammelkanal 13 und dem Kühlmittelkanal 4 zum Beispiel passende Fittings 17a oder Anschlussverschraubungen 17b benötigt. Die Anschlussverschraubungen 17b werden einzeln in das betreffende Kühlprofil 5 und den zugeordneten Kühlmittelsammelkanal 13 geschraubt.

In FIG 4 ist eine perspektivische Schnittansicht einer Kühlmittelsammeleinrichtung 1 eines Batterie-Kühlmittelverteilsystems gemäß einem Ausführungsbeispiel der Erfindung gezeigt. Die Kühlmittelsammeleinrichtung 1 umfasst zwei flexible Kühlmittelsammelrohre 2, die sich parallel zu der Stirnfläche eines Kühlmittelverteilsystems 10, auch als Kühlprofilplatte 9 bezeichnet, erstrecken und durch ein T-förmiges Verbindungsstück 3 mit drei rohrförmigen Verbindungselementen 3a, 3b, 3c miteinander in Verbindung gebracht sind.

Ein erstes rohrförmiges Verbindungselement 3a der drei rohrförmigen Verbindungselemente 3a, 3b, 3c des T-förmigen Verbindungsstücks 3 steckt in einem Kühlmittelkanal 4 eines Batterie-Kühlprofils 5. Dieses erste rohrförmige Verbindungselement 3a umfasst eine ringförmige Nut, in der sich ein Dichtelement 6, in diesem Fall ein O-Ring, befindet.

Die beiden flexiblen Kühlmittelsammelrohre 2 werden von dem T-förmigen Verbindungsstück 3 zusammengeführt. Hierzu sind die beiden flexiblen Kühlmittelsammelrohre 2 mit jeweils einer Rohrschelle 8, auch als Quetschschelle oder Schraubschelle bezeichnet, mit dem zweiten bzw. dem dritten rohrförmigen Verbindungselement 3b, 3c des T-förmigen Verbindungsstücks 3 verbunden.

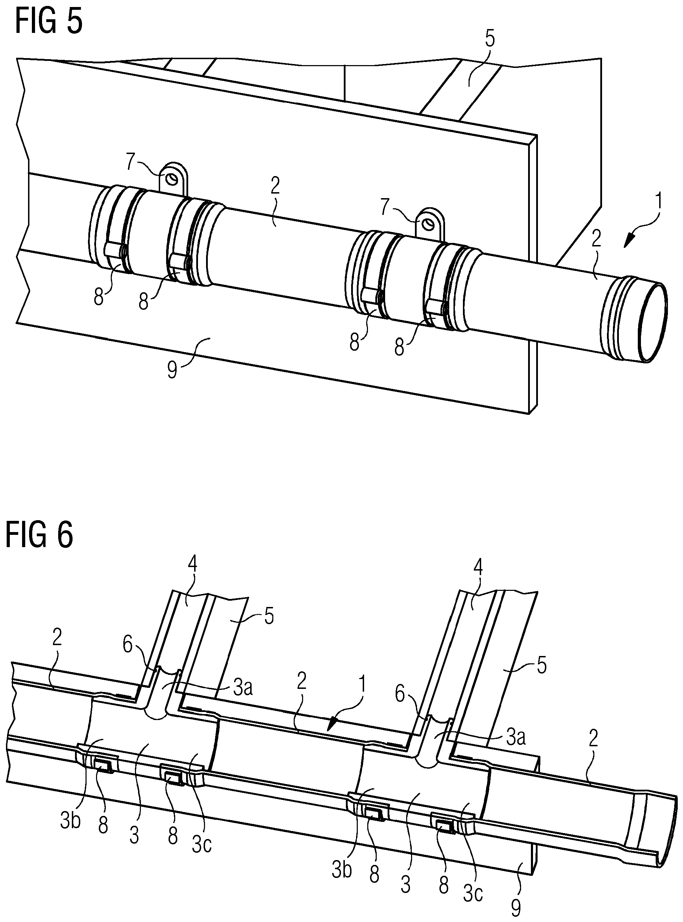

In FIG 5 ist eine Draufsicht auf eine Kühlmittelsammeleinrichtung 1 eines Batterie-Kühlmittelverteilsystems gemäß einem Ausführungsbeispiel der Erfindung gezeigt. Die Kühlmittelsammeleinrichtung 1 ist mit Schraubstellen 7 versehen, die auf der Stirnfläche des Batterie-Kühlmittelverteilsystems bzw. der Kühlprofilplatte 9 verschraubbar sind. Die Schraubstellen 7 sind einstückig mit T-förmigen Verbindungsstücken 3 der Kühlmittelsammeleinrichtung 1 verbunden und bilden zungenförmige Vorsprünge mit Schraublöchern. In FIG 5 sind auch vier Rohrschellen 8 gezeigt, von denen an jedem Ende eines flexiblen Kühlmittelsammelrohres 2 eine Rohrschelle 8 angeordnet ist, um das jeweilige Ende mit einem T-förmigen Verbindungsstücks 3 zu fixieren.

In FIG 6 ist eine Schnittansicht der in FIG 5 dargestellten Kühlmittelsammeleinrichtung 1 eines Batterie-Kühlmittelverteilsystems gemäß einem Ausführungsbeispiel der Erfindung dargestellt. Wie bereits im Zusammenhang mit der in FIG 4 gezeigten Kühlmittelsammeleinrichtung 1 beschrieben, umfasst die in FIG 6 gezeigte Kühlmittelsammeleinrichtung 1 eine Mehrzahl von flexiblen Kühlmittelsammelrohren 2 die sich parallel zu der Stirnfläche eines Kühlmittelverteilsystems bzw. einer Kühlprofilplatte 9 erstrecken. Die flexiblen Kühlmittelsammelrohre 2 werden von T-förmigen Verbindungsstücken 3 mit drei rohrförmigen Verbindungselementen 3a, 3b, 3c zusammengeführt. Zur Fixierung sind die flexiblen Kühlmittelsammelrohre 2 jeweils mit einer Rohrschelle 8 mit den T-förmigen Verbindungsstücken 3 verbunden.

Ein erstes rohrförmiges Verbindungselement 3a der drei rohrförmigen Verbindungselemente 3a, 3b, 3c der T-förmigen Verbindungsstücke 3 steckt jeweils in einem Kühlmittelkanal 4 eines Batterie-Kühlprofils 5, das sich jeweils senkrecht zu der Kühlprofilplatte 9 erstreckt. Dieses erste rohrförmige Verbindungselement 3a umfasst eine ringförmige Nut, in der sich ein Dichtelement 6, in diesem Fall ein O-Ring, befindet. Die zweiten und dritten rohrförmiges Verbindungselemente 3b, 3c des jeweiligen T-förmigen Verbindungsstücks 3 sind jeweils mit den flexiblen Kühlmittelsammelrohren 2 verbunden.

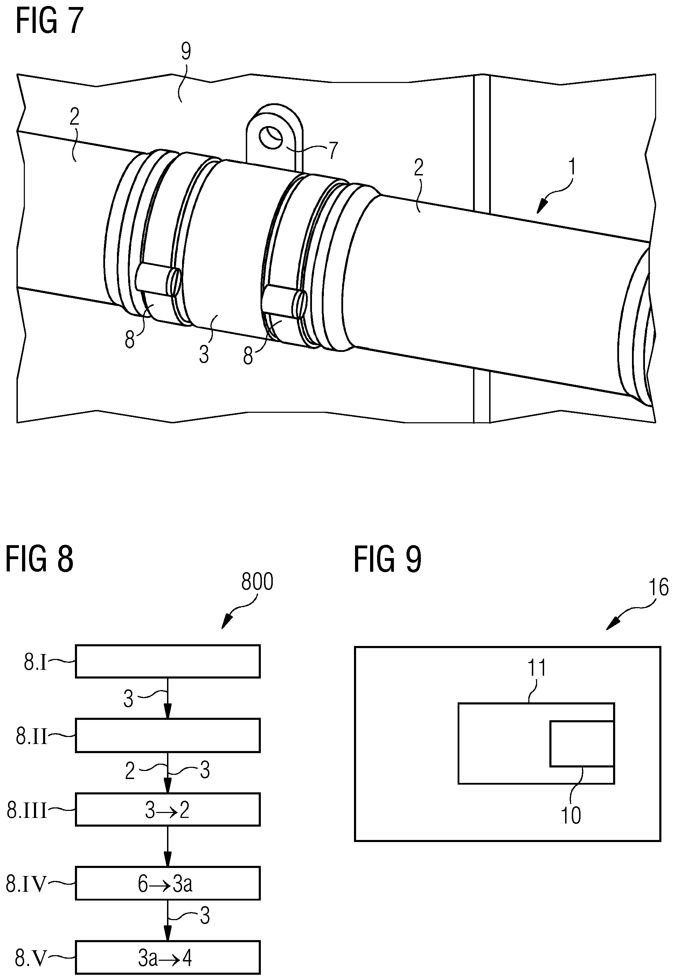

In FIG 7 ist eine detaillierte Draufsicht auf die in FIG 6 gezeigte Kühlmittelsammeleinrichtung 1 gezeigt. Wie bereits im Zusammenhang mit FIG 6 erwähnt ist, sind die flexiblen Kühlmittelsammelrohre 2 mit jeweils einer Rohrschelle 8 mit dem T-förmigen Verbindungsstück 3 verbunden. Auch eine Schraubstelle 7 zur Fixierung des T-förmigen Verbindungsstücks 3 auf der Kühlprofilplatte 9 bzw. Stirnfläche des zugehörigen Batterie-Kühlmittelverteilsystems (nicht gezeigt) ist gezeigt.

In FIG 8 ist ein Flussdiagramm 800 gezeigt, welches ein Verfahren zum Herstellen eines Batterie-Kühlmittelverteilsystems 10 gemäß einem Ausführungsbeispiel der Erfindung veranschaulicht.

Bei dem Schritt 8.I wird ein T-förmiges Verbindungsstück 3 mit drei rohrförmigen Verbindungselementen 3a, 3b, 3c ausgebildet. Dabei wird ein erstes 3a der drei rohrförmigen Verbindungselemente 3a, 3b, 3c, welches quer zu den anderen beiden rohrförmigen Verbindungselementen 3b, 3c orientiert ist, für eine Aufnahme in einem Kühlmittelkanal 4 eines Batterie-Kühlprofils 5 ausgebildet.

Bei dem Schritt 8.II werden zwei flexible Kühlmittelsammelrohre 2 mit einem zu einem Querschnitt von zwei gegenüberliegenden Verbindungselementen 3b, 3c der drei rohrförmigen Verbindungselemente 3a, 3b, 3c passenden Querschnitt ausgebildet.

Bei dem Schritt 8.III wird das T-förmige Verbindungsstück 3 zwischen den flexiblen Kühlmittelsammelrohren 2 angeordnet.

Bei dem Schritt 8.IV wird das erste 3a der drei rohrförmigen Verbindungselemente 3a, 3b, 3c des T-förmigen Verbindungsstücks 3 auf seiner äußeren Umfangsfläche mit einer ringförmigen Nut versehen und mit einem O-Ring in dieser ringförmigen Nut als Dichtelement 6 versehen.

Schließlich wird bei dem Schritt 8.V das erste 3a der drei rohrförmigen Verbindungselemente 3a, 3b, 3c des T-förmigen Verbindungsstücks 3 in einen in einem Batterie-Kühlprofil 5 verlaufenden Kühlmittelkanal 4 eines Batterie-Kühlmittelverteilsystems 10 (siehe FIG 4) eingefügt.

Eine Mehrzahl von T-förmigen Verbindungsstücken 3 und flexiblen Kühlmittelsammelrohre 2 werden auf diese Weise aneinandergefügt, so dass sie eine serielle kettenförmige Anordnung bilden. Die äußeren flexiblen Kühlmittelsammelrohre 2, welche nur mit einem Ende mit einem T-förmigen Verbindungsstück 3 verbunden sind, werden direkt über eine Schnellkupplung mit einem Anschlussschlauch 15 bzw. Zufuhrschlauch oder Abfuhrschlauch verbunden. Dieser Anschlussschlauch 15 ist länger als bei einer herkömmlichen Anordnung und endet im Gegensatz zu der herkömmlichen Anordnung (siehe FIG 2) direkt in einer Schnellkupplung am Ende des Anschlussschlauchs 15 bzw. in einer Verbindung mit einem äußeren flexiblen Kühlmittelsammelrohr 2. Es entfällt somit der in FIG 2 gezeigte zusätzliche Anschluss 15a.

In FIG 9 ist ein Fahrzeug 16 mit einer elektrischen Fahrzeugbatterie 11, insbesondere eine Traktionsbatterie, dargestellt. Die elektrische Fahrzeugbatterie 11 umfasst ein Batterie-Kühlmittelverteilsystem 10 gemäß einem Ausführungsbeispiel der Erfindung.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung, soweit er durch die Ansprüche vorgegeben ist, zu verlassen. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten, die gegebenenfalls auch räumlich verteilt sein können, besteht.

## Patentansprüche

1. Batterie-Kühlmittelverteilsystem (10) für ein Fahrzeug (16), aufweisend:
- ein Batterie-Kühlprofil (5) mit einem darin verlaufenden Kühlmittelkanal (4),
- eine Kühlmittelsammeleinrichtung (1), aufweisend:
- mindestens zwei flexible Kühlmittelsammelrohre (2),
- ein T-förmiges Verbindungsstück (3) mit drei rohrförmigen Verbindungselementen (3a, 3b, 3c),
wobei
- das T-förmige Verbindungsstück (3) zwischen den flexiblen Kühlmittelsammelrohren (2) angeordnet ist und ein erstes der drei rohrförmigen Verbindungselemente (3a, 3b, 3c), welches quer zu den anderen rohrförmigen Verbindungselementen (3a, 3b, 3c) orientiert ist, für eine Aufnahme in dem Kühlmittelkanal (4) des Batterie-Kühlprofils (5) ausgebildet ist, wobei das T-förmige Verbindungsstück (3) eine Fixiereinheit zum Fixieren des T-förmigen Verbindungsstücks (3) an dem Batterie-Kühlprofil (5) aufweist und die Fixiereinheit eine Schraubstelle (7) zum Verschrauben der Fixiereinheit mit dem Batterie-Kühlprofil (5) aufweist, und
- die flexiblen Kühlmittelsammelrohre (2) mit einem zu einem Querschnitt von zwei gegenüberliegenden zweiten und dritten Verbindungselementen (3b, 3c) der drei rohrförmigen Verbindungselemente (3a, 3b, 3c) passenden Querschnitt ausgebildet sind und mit den zweiten und dritten Verbindungselementen (3b, 3c) verbunden sind,
**dadurch gekennzeichnet, dass** die Schraubstelle (7) einstückig mit dem T-förmigen Verbindungsstück (3) der Kühlmittelsammeleinrichtung (1) verbunden ist und einen zungenförmigen Vorsprung mit einem Schraubloch bildet.

2. Batterie-Kühlmittelverteilsystem nach Anspruch 1, wobei die Kühlmittelsammeleinrichtung ein Dichtelement (6) zur Abdichtung zwischen dem ersten rohrförmigen Verbindungselement (3a) und dem Kühlmittelkanal (4) aufweist.

3. Batterie-Kühlmittelverteilsystem nach Anspruch 2, wobei das Dichtelement (6) einen O-Ring umfasst.

4. Batterie-Kühlmittelverteilsystem nach einem der vorstehenden Ansprüche, wobei die flexiblen Kühlmittelsammelrohre (2) mit einer lösbaren Fixiereinheit, vorzugsweise mit einer Rohrschelle (8), an dem T-förmigen Verbindungsstück (3) fixiert sind.

5. Batterie-Kühlmittelverteilsystem nach einem der vorstehenden Ansprüche, wobei die Kühlmittelsammeleinrichtung (1) aufweist:
- eine Mehrzahl der T-förmigen Verbindungsstücke (3),
- mindestens drei flexible Kühlmittelsammelrohre (2), wobei die flexiblen Kühlmittelsammelrohre (2) durch die Mehrzahl der T-förmigen Verbindungsstücke (3) seriell miteinander verbunden sind.

6. Batterie-Kühlmittelverteilsystem nach einem der vorstehenden Ansprüche, wobei das erste rohrförmige Verbindungselement (3a) der drei rohrförmigen Verbindungselemente (3a, 3b, 3c) des T-förmigen Verbindungsstücks (3) der Kühlmittelsammeleinrichtung (1) in den Kühlmittelkanal (4) des Batterie-Kühlprofils (5) eingefügt ist.

7. Batterie-Kühlmittelverteilsystem nach einem der vorstehenden Ansprüche, aufweisend eine Anschlussleitung (15) zu einem Kühlersystem, wobei die Anschlussleitung (15) direkt mit einem äußeren der flexiblen Kühlmittelsammelrohre (2) verbunden ist.

8. Batterie-Kühlmittelverteilsystem nach Anspruch 7, wobei die direkte Verbindung durch eine Schnellverbindung zwischen dem äußeren flexiblen Kühlmittelsammelrohr (2) und der Anschlussleitung (15) ausgebildet ist.

9. Verfahren zum Herstellen eines Batterie-Kühlmittelverteilsystems (10) mit einer Kühlmittelsammeleinrichtung (1), aufweisend die Schritte:
- Ausbilden eines T-förmigen Verbindungsstücks (3) mit drei rohrförmigen Verbindungselementen (3a, 3b, 3c) mit einem ersten (3a) der drei rohrförmigen Verbindungselemente (3a, 3b, 3c), welches quer zu den anderen rohrförmigen Verbindungselementen (3a, 3b, 3c) orientiert ist, für eine Aufnahme in einem Kühlmittelkanal (4) eines Batterie-Kühlprofils (5),
- Ausbilden von mindestens zwei flexiblen Kühlmittelsammelrohren (2) mit einem zu einem Querschnitt von zwei gegenüberliegenden zweiten und dritten Verbindungselementen (3b, 3c) der drei rohrförmigen Verbindungselemente (3a, 3b, 3c) passenden Querschnitt, wobei das T-förmige Verbindungsstück (3) eine Fixiereinheit zum Fixieren des T-förmigen Verbindungsstücks (3) an dem Batterie-Kühlprofil (5) aufweist und die Fixiereinheit eine Schraubstelle (7) zum Verschrauben der Fixiereinheit mit dem Batterie-Kühlprofil (5) aufweist,
- wobei die Schraubstelle (7) einstückig mit dem T-förmigen Verbindungsstück (3) der Kühlmittelsammeleinrichtung (1) verbunden ist und einen zungenförmigen Vorsprung mit einem Schraubloch bildet,
- Anordnen des T-förmigen Verbindungsstücks (3) zwischen den flexiblen Kühlmittelsammelrohren (2) der Kühlmittelsammeleinrichtung (1),
- Verbinden der zweiten und dritten Verbindungselemente (3b, 3c) des T-förmigen Verbindungsstücks (3) mit den flexiblen Kühlmittelsammelrohren (2),
- Einfügen des ersten (3a) der drei rohrförmigen Verbindungselemente (3a, 3b, 3c) des T-förmigen Verbindungsstücks (3) in den Kühlmittelkanal (4) des Batterie-Kühlprofils (5).

10. Fahrzeug (16), aufweisend eine elektrische Batterie (11) mit einem Batterie-Kühlmittelverteilsystem (10) nach einem der Ansprüche 1 bis 8.

## Claims

1. Battery coolant distribution system (10) for a vehicle (16), comprising:
- a battery cooling profile (5) having a coolant channel (4) running therein,
- a coolant-collecting device (1) comprising:
- at least two flexible coolant-collecting tubes (2),
- a T-shaped connecting piece (3) having three tubular connecting elements (3a, 3b, 3c),
wherein
- the T-shaped connecting piece (3) is arranged between the flexible coolant-collecting tubes (2) and a first of the three tubular connecting elements (3a, 3b, 3c), which is oriented perpendicularly to the other tubular connecting elements (3a, 3b, 3c), is designed to be received in the coolant channel (4) of the battery cooling profile (5), wherein the T-shaped connecting piece (3) comprises a fastening unit for fastening the T-shaped connecting piece (3) to the battery cooling profile (5) and the fastening unit comprises a screw point (7) for screwing the fastening unit to the battery cooling profile (5), and
- the flexible coolant-collecting tubes (2) have a cross section compatible with a cross section of two opposite second and third connecting elements (3b, 3c) of the three tubular connecting elements (3a, 3b, 3c) and are connected to the second and third connecting elements (3b, 3c),
**characterized in that** the screw point (7) is integrally connected to the T-shaped connecting piece (3) of the coolant-collecting device (1) and forms a tongue-shaped protrusion having a screw hole.

2. Battery coolant distribution system according to Claim 1, wherein the coolant-collecting device comprises a sealing element (6) for sealing between the first tubular connecting element (3a) and the coolant channel (4).

3. Battery coolant distribution system according to Claim 2, wherein the sealing element (6) comprises an O-ring.

4. Battery coolant distribution system according to one of the preceding claims, wherein the flexible coolant-collecting tubes (2) are fastened to the T-shaped connecting piece (3) by means of a releasable fastening unit, preferably by means of a tube clamp (8).

5. Battery coolant distribution system according to one of the preceding claims, wherein the coolant-collecting device (1) comprises:
- a plurality of the T-shaped connecting pieces (3),
- at least three flexible coolant-collecting tubes (2), wherein the flexible coolant-collecting tubes (2) are connected to one another in series by the plurality of T-shaped connecting pieces (3).

6. Battery coolant distribution system according to one of the preceding claims, wherein the first tubular connecting element (3a) of the three tubular connecting elements (3a, 3b, 3c) of the T-shaped connecting piece (3) of the coolant-collecting device (1) is inserted into the coolant channel (4) of the battery cooling profile (5).

7. Battery coolant distribution system according to one of the preceding claims, comprising a connection line (15) to a cooler system, wherein the connection line (15) is connected directly to an outer of the flexible coolant-collecting tubes (2).

8. Battery coolant distribution system according to Claim 7, wherein the direct connection is formed by a quick coupling between the outer flexible coolant-collecting tube (2) and the connection line (15).

9. Method for producing a battery coolant distribution system (10) having a coolant-collecting device (1), comprising the steps of:
- forming a T-shaped connecting piece (3) having three tubular connecting elements (3a, 3b, 3c) with a first (3a) of the three tubular connecting elements (3a, 3b, 3c), which is oriented perpendicularly to the other tubular connecting elements (3a, 3b, 3c), for receiving in a coolant channel (4) of a battery cooling profile (5),
- forming at least two flexible coolant-collecting tubes (2) having a cross section compatible with a cross section of two opposite second and third connecting elements (3b, 3c) of the three tubular connecting elements (3a, 3b, 3c), wherein the T-shaped connecting piece (3) comprises a fastening unit for fastening the T-shaped connecting piece (3) to the battery cooling profile (5) and the fastening unit comprises a screw point (7) for screwing the fastening unit to the battery cooling profile (5),
- wherein the screw point (7) is integrally connected to the T-shaped connecting piece (3) of the coolant-collecting device (1) and forms a tongue-shaped protrusion having a screw hole,
- arranging the T-shaped connecting piece (3) between the flexible coolant-collecting tubes (2) of the coolant-collecting device (1),
- connecting the second and third connecting elements (3b, 3c) of the T-shaped connecting piece (3) to the flexible coolant-collecting tubes (2),
- inserting the first (3a) of the three tubular connecting elements (3a, 3b, 3c) of the T-shaped connecting piece (3) into the coolant channel (4) of the battery cooling profile (5).

10. Vehicle (16) comprising an electric battery (11) having a battery coolant distribution system (10) according to one of Claims 1 to 8.

## Revendications

1. Système de distribution de liquide de refroidissement de batterie (10) pour un véhicule (16), comprenant :
- un profilé de refroidissement de batterie (5) avec un canal de liquide de refroidissement (4) s'étendant dans celui-ci,
- un dispositif de collecte de liquide de refroidissement (1), comprenant :
- au moins deux tubes de collecte de liquide de refroidissement (2) souples,
- une pièce de liaison (3) en forme de T avec trois éléments de liaison (3a, 3b, 3c) tubulaires,
dans lequel
- la pièce de liaison (3) en forme de T est disposée entre les tubes de collecte de liquide de refroidissement (2) souples et un premier des trois éléments de liaison (3a, 3b, 3c) tubulaires, lequel est orienté perpendiculairement aux autres éléments de liaison (3a, 3b, 3c) tubulaires, est conçu pour une réception dans le canal de liquide de refroidissement (4) du profilé de refroidissement de batterie (5), dans lequel la pièce de liaison (3) en forme de T comprend une unité de fixation pour la fixation de la pièce de liaison (3) en forme de T au profilé de refroidissement de batterie (5) et l'unité de fixation comprend un point de vissage (7) pour le vissage de l'unité de fixation sur le profilé de refroidissement de batterie (5), et
- les tubes de collecte de liquide de refroidissement (2) souples présentent une section transversale adaptée à une section transversale de deux deuxième et troisième éléments de liaison (3b, 3c) opposés des trois éléments de liaison (3a, 3b, 3c) tubulaires et sont reliés aux deuxième et troisième éléments de liaison (3b, 3c),
**caractérisé en ce que** le point de vissage (7) est relié d'une seule pièce à la pièce de liaison (3) en forme de T du dispositif de collecte de liquide de refroidissement (1) et forme avec un trou de vis une saillie en forme de languette.

2. Système de distribution de liquide de refroidissement de batterie selon la revendication 1, dans lequel le dispositif de collecte de liquide de refroidissement comprend un élément d'étanchéité (6) pour l'étanchéification entre le premier élément de liaison (3a) tubulaire et le canal de liquide de refroidissement (4).

3. Système de distribution de liquide de refroidissement de batterie selon la revendication 2, dans lequel l'élément d'étanchéité (6) comporte un joint torique.

4. Système de distribution de liquide de refroidissement de batterie selon l'une des revendications précédentes, dans lequel les tubes de collecte de liquide de refroidissement (2) souples sont fixés avec une unité de fixation amovible, de préférence avec un collier de serrage (8), à la pièce de liaison (3) en forme de T.

5. Système de distribution de liquide de refroidissement de batterie selon l'une des revendications précédentes, dans lequel le dispositif de collecte de liquide de refroidissement (1) comprend :
- une pluralité des pièces de liaison (3) en forme de T,
- au moins trois tubes de collecte de liquide de refroidissement (2) souples, dans lequel les tubes de collecte de liquide de refroidissement (2) souples sont reliés les uns aux autres en série par la pluralité des pièces de liaison (3) en forme de T.

6. Système de distribution de liquide de refroidissement de batterie selon l'une des revendications précédentes, dans lequel le premier élément de liaison (3a) tubulaire des trois éléments de liaison (3a, 3b, 3c) tubulaires de la pièce de liaison (3) en forme de T du dispositif de collecte de liquide de refroidissement (1) est inséré dans le canal de liquide de refroidissement (4) du profilé de refroidissement de batterie (5).

7. Système de distribution de liquide de refroidissement de batterie selon l'une des revendications précédentes, comprenant une conduite de raccordement (15) à un système de refroidissement, dans lequel la conduite de raccordement (15) est reliée directement à un tube de collecte de liquide de refroidissement (2) souple externe parmi les tubes de collecte de liquide de refroidissement (2) souples.

8. Système de distribution de liquide de refroidissement de batterie selon la revendication 7, dans lequel la liaison directe est constituée par une liaison rapide entre le tube de collecte de liquide de refroidissement (2) souple externe et la conduite de raccordement (15).

9. Procédé pour la fabrication d'un système de distribution de liquide de refroidissement de batterie (10) avec un dispositif de collecte de liquide de refroidissement (1), comprenant les étapes :
- de conception d'une pièce de liaison (3) en forme de T avec trois éléments de liaison (3a, 3b, 3c) tubulaires, avec un premier (3a) des trois éléments de liaison (3a, 3b, 3c) tubulaires, lequel est orienté perpendiculairement aux autres éléments de liaison (3a, 3b, 3c) tubulaires, pour une réception dans un canal de liquide de refroidissement (4) d'un profilé de refroidissement de batterie (5),
- de conception d'au moins deux tubes de collecte de liquide de refroidissement (2) souples présentant une section transversale adaptée à une section transversale de deux deuxième et troisième éléments de liaison (3b, 3c) opposés des trois éléments de liaison (3a, 3b, 3c) tubulaires, dans lequel la pièce de liaison (3) en forme de T comprend une unité de fixation pour la fixation de la pièce de liaison (3) en forme de T au profilé de refroidissement de batterie (5) et l'unité de fixation comprend un point de vissage (7) pour le vissage de l'unité de fixation sur le profilé de refroidissement de batterie (5),
- dans lequel le point de vissage (7) est relié d'une seule pièce à la pièce de liaison (3) en forme de T du dispositif de collecte de liquide de refroidissement (1) et forme avec un trou de vis une saillie en forme de languette,
- de disposition de la pièce de liaison (3) en forme de T entre les tubes de collecte de liquide de refroidissement (2) souples du dispositif de collecte de liquide de refroidissement (1),
- de liaison des deuxième et troisième éléments de liaison (3b, 3c) de la pièce de liaison (3) en forme de T aux tubes de collecte de liquide de refroidissement (2) souples,
- d'insertion du premier (3a) des trois éléments de liaison (3a, 3b, 3c) tubulaires de la pièce de liaison (3) en forme de T dans le canal de liquide de refroidissement (4) du profilé de refroidissement de batterie (5).

10. Véhicule (16), comprenant une batterie électrique (11) avec un système de distribution de liquide de refroidissement de batterie (10) selon l'une des revendications 1 à 8.
